# EUROPÄISCHE PATENTSCHRIFT

(11) **EP 2 762 120 B1**
(45) Veröffentlichungstag und Bekanntmachung des Hinweises auf die Patenterteilung: **08.07.2015**
(21) Anmeldenummer: 13000537.4
(22) Anmeldetag: 01.02.2013
(51) Int. Cl.: A61G 3/00

(54) **Kraftfahrzeug, insbesondere Rettungsfahrzeug**
Motor vehicle, in particular a rescue vehicle
Véhicule automobile, en particulier véhicule de secours

(43) Veröffentlichungstag der Anmeldung: 06.08.2014
(73) Patentinhaber: BINZ Ambulance- und Umwelttechnik GmbH, 98693 Ilmenau (DE)
(72) Erfinder: Busam, Carsten, 77654 Offenburg (DE)
(74) Vertreter: Huwer, Andreas

(56) Entgegenhaltungen:
- EP-B1- 2 052 706
- DE-U1- 8 101 731
- FR-A1- 2 664 542

## Beschreibung

Die Erfindung betrifft ein Kraftfahrzeug, insbesondere ein Rettungsfahrzeug, mit einem Passagierraum, der durch mindestens eine Seitenwand begrenzt ist, die eine Türöffnung aufweist, an der eine in eine Offen- und eine Schließstellung bringbare Fahrzeugtür angeordnet ist, wobei in dem Passagierraum benachbart zu der Türöffnung mindestens ein Ablagefach zur Aufnahme von Ausrüstungsgegenständen des Kraftfahrzeugs vorgesehen ist.

Ein derartiges, für Krankentransporte vorgesehenes Kraftfahrzeug, ist aus EP 2 052 706 B1 bekannt. Das Kraftfahrzeug ist als Kleinbus ausgestaltet, der eine Fahrerkabine mit einem dahinter befindlichen Passagierraum aufweist, in dem eine Liege für einen zu transportierenden Patienten angeordnet ist. Der Passagierraum ist an der in Vorwärtsfahrtrichtung rechten Fahrzeugseite durch eine Seitenwand begrenzt, die eine Türöffnung aufweist, an der eine Schiebetür angeordnet ist. Die Schiebetür ist zwischen einer Schließstellung, in der sie die Türöffnung verschließt, und einer Offenstellung, in der sie in Vorwärtsfahrtrichtung hinter der Türöffnung angeordnet ist, verschiebbar an der Seitenwand gelagert. Wenn das Fahrzeug in Vorwärtsfahrtrichtung am rechten Straßenrand abgestellt ist, ist der Passagierraum durch die Türöffnung vom Gehweg bzw. vom rechten Fahrbahnrand aus zugänglich.

In der der linken Hälfte der Fahrerkabine ist ein Fahrersitz angeordnet und in der rechten Hälfte der Fahrerkabine befinden sich neben dem Fahrersitz mehrere Ablagefächer übereinander, die zur Aufnahme von Ausrüstungsgegenständen des Kraftfahrzeugs dienen. In einem unteren Ablagefach, das sich vom Passagierraum bis zur Armaturentafel erstreckt, ist ein Rollator angeordnet. Die beiden darüber befindlichen Ablagefächer dienen zur Aufnahme von medizinischen Einrichtungen, wie zum Beispiel einem Erstehilfe-Koffer.

Jedes Ablagefach weist jeweils eine dem Passagierraum zugewandte Öffnung auf, die derart benachbart zu der Türöffnung angeordnet sind, dass eine Person, die sich außerhalb des Kraftfahrzeugs an der Türöffnung der Schiebetür befindet, die Ausrüstungsgegenstände aus den Ablagefächern entnehmen bzw. in den Ablagefächern ablegen kann. Das Kraftfahrzeug hat jedoch den Nachteil, dass neben dem Fahrersitz kein Platz für einen Beifahrersitz vorhanden ist, weil dort die Ablagefächer vorgesehen sind.

Aus DE 81 01 731 U1 ist ferner ein Kraftfahrzeug der eingangs genanten Art bekannt, das als Wohnmobil ausgestaltet ist, das eine Fahrerkabine und einen dahinter befindlichen Passagierraum aufweist, in dem Sitzbänke, ein Kühlschrank und ein Küchenblock mit einer Spüle und darunter befindlichen Ablagen vorgesehen sind. In dem Passagierraum ist an der in Vorwärtsfahrtrichtung rechten Fahrzeugseite durch eine Seitenwand begrenzt, die eine Türöffnung aufweist, an der eine Drehtür angeordnet ist, die am vorderen Seitenrand der Türöffnung um eine vertikale Schwenkachse verschwenkbar gelagert ist. Die Drehtür ist aus einer Schließstellung, in der sie die Türöffnung verschließt, um etwa 180° um die Schwenkachse in eine Offenstellung verschwenkbar, in der die Drehtür mit ihrer Außenseite der Außenseite einer Beifahrertür zugewandt ist, die an der Seitenwand in Vorwärtsfahrtrichtung vor der Drehtür angeordnet ist. Der Küchenblock ist derart an der in Schließstellung dem Passagierraum zugewandten Innenseite der Drehtür angeordnet, dass er bei geschlossener Drehtür im Passagierraum und bei in der 180°-Oflenstellung befindlicher Drehtür außerhalb des Passagierraums seitlich neben der Beifahrertür angeordnet ist. Das Kraftfahrzeug hat jedoch den Nachteil, dass die Drehtür beim Öffnen relativ weit in den Verkehrsraum verschwenkt. Wenn das Fahrzeug am rechten Fahrbahnrand geparkt wird, können bei einem unvorsichtigen Öffnen der Drehtür Radfahrer, die auf einem rechts neben der Fahrbahn verlaufenden Radweg unterwegs sind, gefährdet werden.

Es besteht deshalb die Aufgabe, ein Kraftfahrzeug der eingangs genannte Art zu schaffen, bei dem das mindestens eine Ablagefach platzsparend im Kraftfahrzeug untergebracht ist, bei dem die Öffnung des mindestens einen Ablagefachs sowohl für eine im Passagierraum befindliche Person als auch für eine Peron, die sich außerhalb des Kraftfahrzeugs an der Türöffnung befindet, bequem erreichbar ist, und bei dem die Gefahr, dass beim Öffnen der Fahrzeugtür der Verkehr auf einem zu der Fahrzeugtür benachbarten Fahrstreifen gefährdet wird, weitgehend vermieden wird.

Diese Aufgabe wird bei einem Kraftfahrzeug der eingangs genannte Art dadurch gelöst, dass die Fahrzeugtür als Drehfalttür mit einem inneren, um eine erste Vertikalachse verschwenkbar mit der Seitenwand verbundenen Türflügel und einem äußeren Türflügel ausgestaltet ist, der über eine parallel zu der ersten Vertikalachse angeordnete zweite Vertikalachse derart mit dem inneren Türflügel verschwenkbar verbunden ist, dass die in der Schließstellung der Fahrzeugtür dem Passagierraum abgewandten Außenseiten der Türflügel beim Öffnen der Fahrzeugtür aufeinander zu- und beim Schließen der Fahrzeugtür voneinander weg verschwenken, und dass das mindestens eine Ablagefach an der in der Schließstellung dem Passagierraum zugewandten Innenseite des äußeren Türflügels angeordnet ist.

In vorteilhafter Weise kann durch diese Maßnahmen das mindestens eine Ablagefach von einer Person, die sich bei offener Fahrzeugtür außerhalb des Kraflfahrzeugs an der Türöffnung der Drehfalttür befindet, bequem erreicht werden, um Ausrüstungsgegenstände aus dem Ablagefach zu entnehmen und/oder in diesem abzulegen. Bei geschlossener Fahrzeugtür ist das an der Innenseite des äußeren Türflügels angeordnete Ablagefach vom Passagierraum aus zugänglich, beispielsweise um mit darin abgelegten Ausrüstungsgegenständen einen im Passagierraum befindlichen Patienten zu versorgen. Da die Fahrzeugtür als Drehfalttür ausgestaltet ist, bei welcher der innere Türflügel beim Öffnen der Fahrzeugtür in den Passagierraum verschwenkt, kann beim Öffnen der Fahrzeugtür eine Gefährdung des Straßenverkehrs auf zu dem Kraftfahrzeug benachbarten Fahrspuren weitestgehend vermieden werden. Die Anordnung des mindestens einen Ablagefachs an der Innenseite des äußeren Türflügels ermöglich eine platzsparende Unterbringung der Ausrüstungsgegenstände. Unter der ersten und zweiten Vertikalachse werden gedachte Achsen verstanden, um welche der innere bzw. äußere Türflügel relativ zur Seitenwand verschwenkbar ist.

Bei einer bevorzugten Ausgestaltung der Erfindung ist der äußere Türflügel gegenüber dem inneren Türflügel derart verbreitert, dass das Ablagefach in der Offenstellung der Fahrzeugtür gegenüber der dem Passagierraum abgewandten Außenftäche der Seitenwand nach außen vorsteht. Dadurch kann das Ablagefach bei offener Fahrzeugtür noch bequemer von einer außerhalb des Kraftfahrzeugs an der Türöffnung der Schiebetür befindlichen Person erreicht werden.

Die Fahrzeugtür ist bevorzugt seitlich am Kraftfahrzeug angeordnet ist, vorzugsweise an der Beifahrerseite. Der Passagierraum ist dann vom Fahrbahnrand aus durch die Fahrzeugtür zugänglich, wenn das Kraftfahrzeug in Vorwärtsfahrtrichtung am Fahrbahnrand abgestellt ist.

Bei einer bevorzugten Ausführungsform der Erfindung weist das Kraftfahrzeug an der Seite, an der sich die Fahrzeugtür befindet, einen Außenspiegel auf, wobei der äußere Türflügel derart gegenüber dem inneren Türflügel verbreitert ist, dass er bei in Offenstellung befindlicher Fahrzeugtür nicht weiter über die Außenfläche der Seitenwand nach außen vorsteht als der Außenspiegel. Dadurch wird bei offener Fahrzeugtür eine Einengung des Verkehrsraumes auf einer zu dem Kraftfahrzeug benachbarten Fahrspur vermieden.

Vorteilhaft ist, wenn das Ablagefach zwischen einer dem Passagierraum zugewandten, mit dem äußeren Türflügel verbundenen inneren Fachwand und dem äußeren Türflügel gebildet ist, und wenn das mindestens eine Ablagefach an seiner dem äußeren Rand des inneren Türflügels abgewandten Seite wenigstens eine Öffnung aufweist, die sich quer zu der vom äußeren Türflügel aufgespannten Ebene erstreckt. Die Öffnung weist dann bei offener Fahrzeugtür vom Kraftfahrzeug weg, wodurch sie für eine außerhalb des Kraftfahrzeugs befindliche Person noch besser erreichbar ist. Bei geschlossener Fahrzeugtür ist die Öffnung dem Passagierraum zugewandt, so dass sie von dort bequem erreichbar ist.

Bei einer zweckmäßigen Ausgestaltung der Erfindung ist an dem dem äußeren Türflügel abgewandt gegenüberliegenden Rand der Öffnung ein Türgriff angeordnet, der vorzugsweise als Griffstange ausgestaltet ist. Dabei erstreckt sich die Griffstange bevorzugt in vertikale Richtung, so dass sowohl von einer innerhalb des Passagierraums befindlichen Person und - bei offener Fahrzeugtür - von einer außerhalb des Passagierraums befindlichen Person gut erreichbar ist.

Bei einer bevorzugten Ausführungsform der Erfindung ist an der bei in Schließstellung befindlicher Fahrzeugtür dem Passagierraum zugewandten Innenseite der inneren Fachwand und/oder des äußeren Türflügels eine Bedieneinrichtung zum Betätigen von Funktionen des Kraftfahrzeugs derart angeordnet, dass die Bedieneinrichtung bei in Offenstellung befindlicher Fahrzeugtür außerhalb des Passagierraums angeordnet ist. Die Bedieneinrichtung kann dann bei geschlossener Fahrzeugtür vom Passagierraum und bei offener Fahrzeugtür von außerhalb des Kraftfahrzeugs bedient werden. Die Bedieneinrichtung kann zum Bedienen elektrischer, hydraulischer und/oder pneumatischer Einrichtungen und/oder einer Klimatisierungseinrichtung des Kraftfahrzeugs ausgestaltet sein. Die elektrischen Einrichtungen können insbesondere eine Beleuchtungsanlage und/oder eine Belüftungseinrichtung für den Passagierraum umfassen.

Bevorzugt ist an der Seitenwand unterhalb der Türöffnung ein nach oben offener Trittabschnitt mit einer darunter befindlichen Trittstufe vorgesehen, wobei an der Unterseite des Ablagefachs vorzugsweise eine Türdichtung angeordnet ist, die bei in Schließstellung befindlicher Fahrzeugtür derart am Rand des Trittabschnitts zur Anlage kommt, dass der Passagierraum gegen den Trittabschnitt abgedichtet ist. Der Trittabschnitt ermöglich einen bequemen Einstieg in den Passagierraum bzw. Ausstieg aus dem Passagierraum. Wenn die Fahrzeugtür geschlossen ist, befindet sich das mindestens eine Ablagefach über dem Trittabschnitt, so dass der dort befindliche Raum für eine platzsparende Unterbringung der Ausrüstungsgegenstände genutzt werden kann und die Trittöffnung im Boden verschlossen ist. Damit wird die Sicherheit im Passagierraum z.B. bei der Patientenbeförderung gesteigert.

Bei einer zweckmäßigen Ausgestaltung der Erfindung ist an der Seitenwand oberhalb der Türflügel eine horizontale Führungsschiene angeordnet, wobei am äußeren Türflügel ein von der zweiten Vertikalachse beabstandetes, an der Führungsschiene verschiebbares Führungsteil angeordnet ist. Die Drehfalttür ermöglicht dadurch einen einfachen, robusten und platzsparenden Aufbau.

Bevorzugt ist am inneren Türflügel und/oder am äußeren Türflügel zwischen der ersten Vertikalachse und dem Führungsteil ein Anschlag angeordnet, der in Schließstellung der Fahrzeugtür gegen eine an der Seitenwand vorgesehene Widerlagerstelle positioniert ist. Die Türflügel der Fahrzeugtür sind dann in ihrer Schließstellung exakt in der Ebene der Türöffnung ausgerichtet. Durch den Anschlag wird außerdem verhindert, dass der innere Türflügel aus der Schließstellung nach außen verschwenkt werden kann.

Nachfolgend ist ein Ausführungsbeispiel der Erfindung anhand der Zeichnung näher erläutert. Es zeigt
- Fig. 1: eine perspektivische Ansicht eines Rettungsfahrzeugs, das einen Kofferaufbau aufweist, der einen Passagierraum umgrenzt, der über eine seitliche Drehfalttür zugänglich ist, wobei die Drehfalttür geschlossen ist,
- Fig. 2: eine Darstellung ähnlich Fig. 1, wobei die Drehfalttür jedoch teilweise geöffnet ist,
- Fig. 3: eine Darstellung ähnlich Fig. 1, welche die Drehfalttür in der Offenstellung zeigt,
- Fig. 4: eine Ansicht auf die Innenseite der in Schließstellung befindlichen Drehfalttür,
- Fig. 5: eine Darstellung ähnlich Fig. 4, wobei die Drehfalttür jedoch teilweise geöffnet ist,
- Fig. 6: eine Darstellung ähnlich Fig. 4, welche die Drehfalttür in der Offenstellung zeigt,

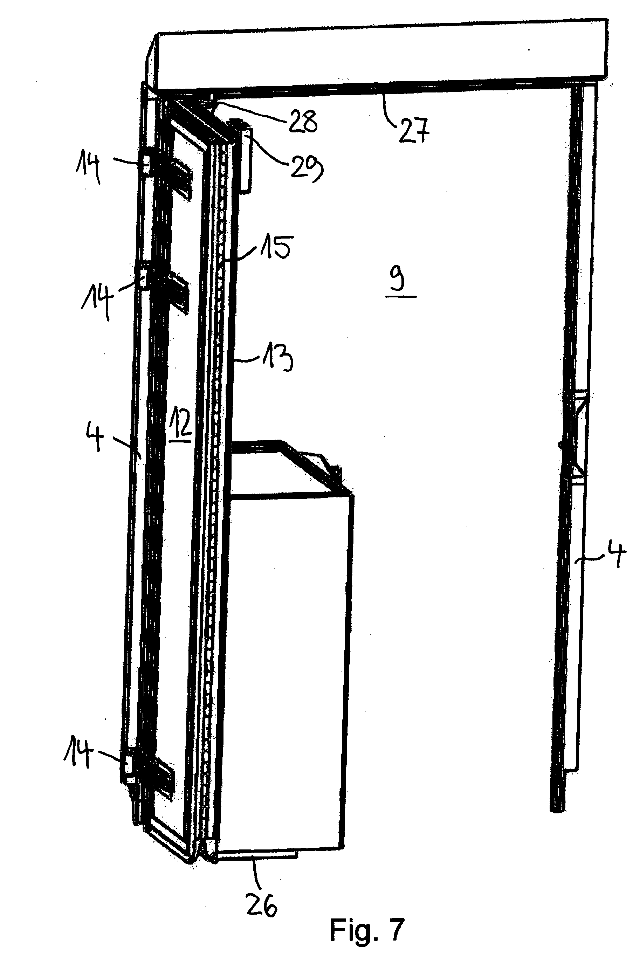

- Fig. 7: eine Ansicht auf die Innenseite der in der Offenstellung befindlichen Drehfalttür, und
- Fig. 8: eine Ansicht auf den unteren Teil der Drehfalttür und einen darunter befindlichen Trittabschnitt.

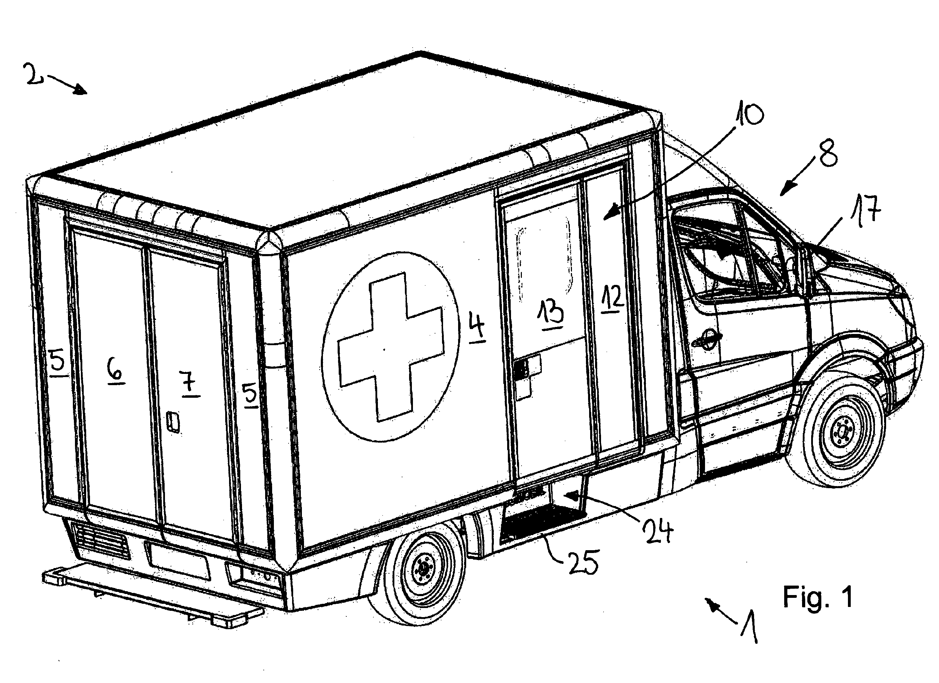

Ein in Fig. 1 bis 3 im Ganzen mit 1 bezeichnetes, als Krankenwagen ausgestaltetes Kraftfahrzeug weist ein Fahrwerk auf, auf dem ein Kastenaufbau 2 angeordnet ist, der einen Passagierraum 3 umgrenzt, in dem eine in der Zeichnung nicht näher dargestellte Patientenliege und medizinische Einrichtungen zur Versorgung des Patienten angeordnet sind. Der Kastenaufbau 2 hat auf der Fahrerseite und auf der Beifahrerseite des Kraftfahrzeugs 1 jeweils eine Seitenwand 4 und am Heck des Kraftfahrzeugs eine Rückwand 5. Die Rückwand weist zwei Drehtüren 6, 7 auf, über welche der Passagierraum 3 von der Rückseite des Kraftfahrzeugs 1 aus zugänglich ist.

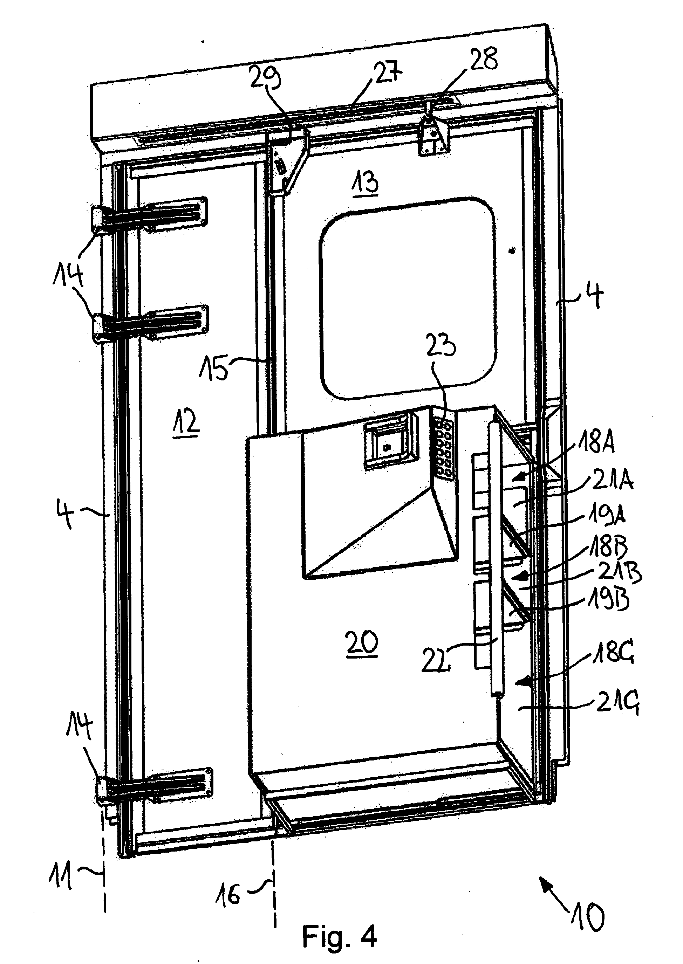

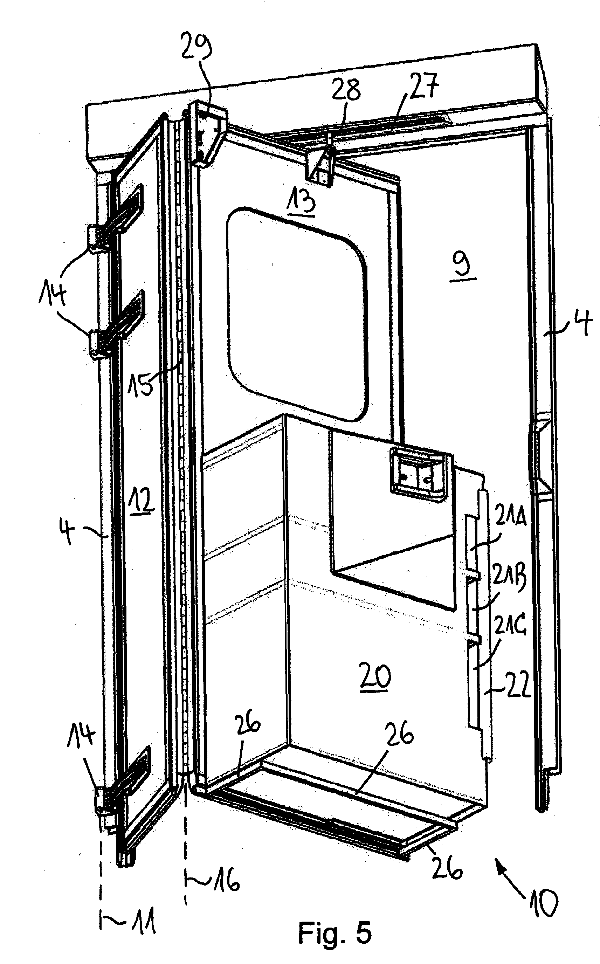

Die an der Beifahrerseite befindliche Seitenwand 4 hat in einem vorderen, zu einer Fahrerkabine 9 benachbarten Abschnitt eine Türöffnung 9, an der eine in eine Offen- und eine Schließstellung bringbare Fahrzeugtür 10 angeordnet ist, die als Drehfalttür ausgestaltet ist. Die Fahrzeugtür 10 hat einen inneren Türflügel 12 und einen äußeren Türflügel 1 3. Der innere Türflügel 12 ist mittels mehrerer, in vertikaler Richtung voneinander beabstandeter erster Schwenklager 14 um eine gedachte erste Vertikalachse 11 verschwenkbar mit der Seitenwand 2 verbunden. Wie in Fig. 4 und 5 erkennbar ist, ist die erste Vertikalachse 11 dicht benachbart zum vorderen Vertikalrand der Türöffnung 9 angeordnet.

Der äußere Türflügel 13 ist an seinem dem inneren Türflügel 12 zugewandten inneren Vertikalrand über ein als Scharnierband ausgebildetes zweites Schwenklager 15 um eine parallel zu der ersten Vertikalachse 11 verlaufende zweite Vertikalachse 16 verschwenkbar mit dem äußeren Vertikalrand des inneren Türflügels verbunden. Wie in Fig. 1, 2 und 3 erkennbar ist, sind die Schwenklager 14 und 15 derart ausgestaltet, dass die in der Schließstellung der Fahrzeugtür dem Passagierraum abgewandten Außenseiten der Türflügel beim Öffnen der Fahrzeugtür 10 aufeinander zu- und beim Schließen der Fahrzeugtür voneinander weg verschwenken.

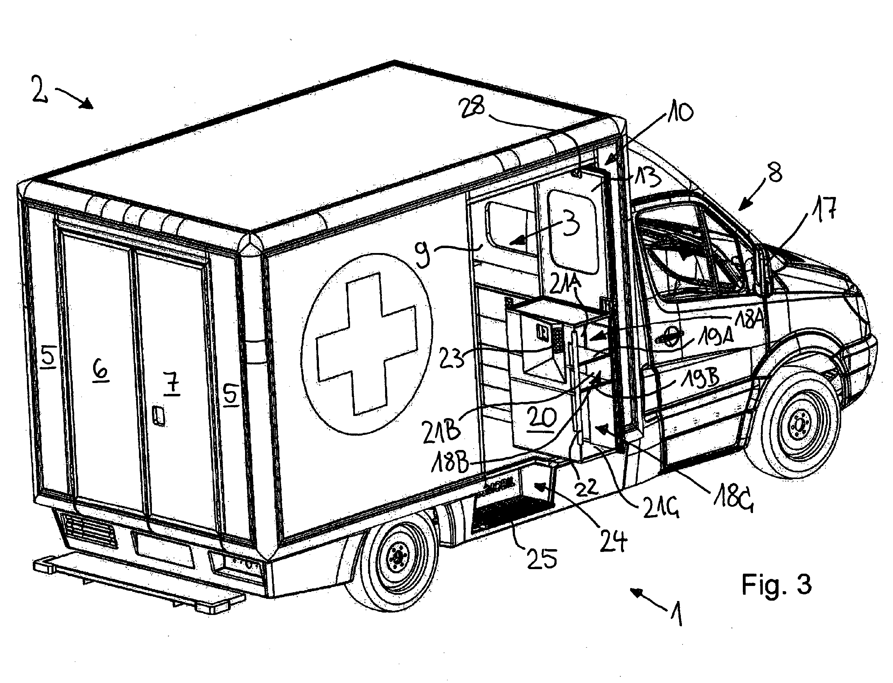

Wie in Fig. 4 besonders gut erkennbar ist, ist der äußere Türflügel 13 gegenüber dem inneren Türflügel 12 verbreitert. Dadurch steht der äußere Türflügel 13 bei offener Fahrzeugtür 10 mit seinem äußeren Rand außenseitig über die Seitenwand 4 über (Fig. 3). Das Maß, um welches der äußere Türflügel 13 gegenüber dem inneren Türflügel 12 verbreitert ist, ist derart gewählt, der äußere Türflügel 13 bei offener Fahrzeugtür 10 nicht weiter seitlich über die Außenfläche der Seitenwand 4 vorsteht als ein auf derselben Fahrzeugseite wie die Fahrzeugtür 10 befindlicher Außenspiegel 17.

An der in der Schließstellung der Fahrzeugtür dem Passagierraum 3 zugewandten Innenseite des äußeren Türflügels 13 sind mehrere Ablagefächer 18A 18B, 18C zur Aufnahme von Ausrüstungsgegenständen des Kraftfahrzeugs 1 vorgesehen. Die Ablagefächer 18A, 18B, 18C sind übereinander angeordnet und durch Zwischenböden 19A 19B voneinander getrennt.

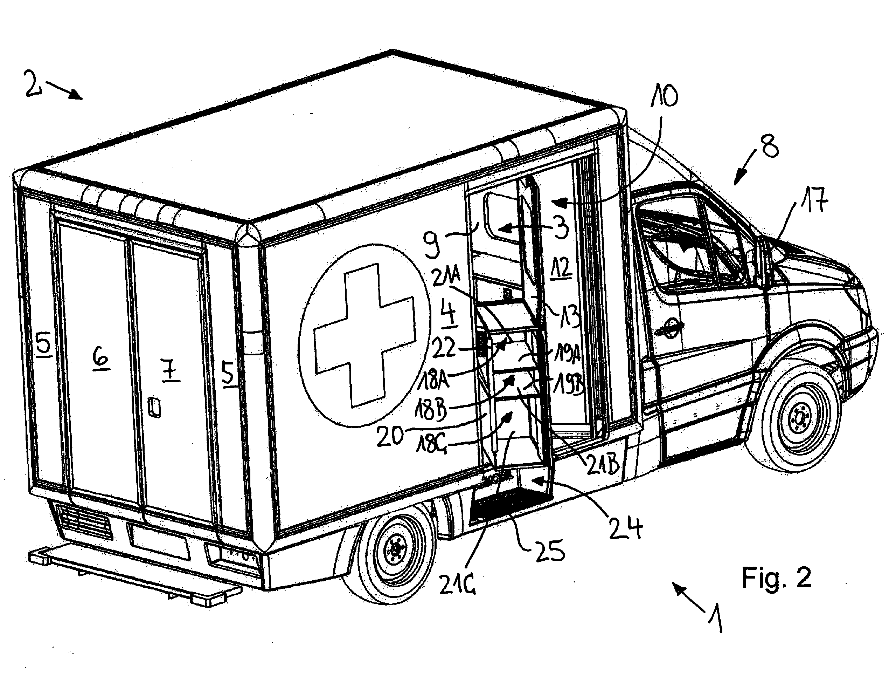

Wie in Fig. 2 und 4 besonders gut erkennbar ist, sind die Ablagefächer 18A 18B, 18C jeweils zwischen einer dem Passagierraum 3 zugewandten, mit dem äußeren Türflügel 13 verbundenen inneren Fachwand 20 und dem äußeren Türflügel 13 gebildet. Jedes Ablagefach 18A, 18B, 18C weist jeweils an seiner bei geschlossener Fahrzeugtür 10 dem äußeren Rand des inneren Türflügels 12 abgewandten Seite eine Öffnung 21A, 21 B, 21 C auf, die sich etwa in einer rechtwinklig zu der vom äußeren Türflügel 14 aufgespannten Ebene angeordneten Vertikalebene erstreckt.

Bei geschlossener Fahrzeugtür 10 sind die Öffnungen 21A, 21B, 21C derart im Passagierraum 3 angeordnet, dass sie der Rückwand 5 zugewandt sind. Bei offner Fahrzeugtür 10 befinden sich die Öffnungen 21A, 21 B, 21 C außerhalb des Passagierraums 3 und weisen von diesem weg. Dadurch sind die Ablagefächer 18A, 18B, 18C für eine außerhalb des Fahrzeugs 1 neben der Fahrzeugtür 10 stehenden Person bequem zu erreichen.

Die Abmessung, welche die aus dem äußeren Türflügel 13 und den Ablagefächern 18A, 18B, 18C gebildete Anordnung quer zu der Ebene aufweist, in der sich der äußere Türflügel 13 erstreckt, entspricht etwa der Abmessung, welche der in Schließstellung befindliche innere Türflügel 12 in Fahrzeuglängsrichtung aufweist.

Wie in Fig. 4 besonders gut erkennbar ist, ist an dem dem äußeren Türflügel 1 3 abgewandt gegenüberliegenden Rand der Öffnungen 21A, 21B, 21C ein Türgriff 22 angeordnet. Der Türgriff 22 ist als Griffstange ausgestaltet, die sich in vertikale Richtung unterbrechungsfrei über mehrere Abtagefächer 18A, 18B, 18C erstreckt.

Wie in Fig. 4 weiter erkennbar ist, ist an der bei in Schließstellung befindlicher Fahrzeugtür 10 dem Passagierraum 3 zugewandten Innenseite der inneren Fachwand 20 eine flächige Bedieneinrichtung 23 zum Betätigen von Funktionen des Kraftfahrzeugs angeordnet. Wenn die Fahrzeugtür geschlossen ist, ist die Bedieneinrichtung 23 im Passagierraum 3 angeordnet und der Rückwand 5 des Kastenaufbau 2 zugewandt. Bei in Offenstellung befindlicher Fahrzeugtür 10 ist die Bedieneinrichtung 23 derart außerhalb des Passagierraums 3 angeordnet, dass sie mit ihrer Bedienfläche vom Passagierraums 3 weg weist. Dadurch kann die Bedieneinrichtung 23 von einer außerhalb des Fahrzeugs 1 neben der Fahrzeugtür 10 stehenden Person bequem betätigt werden.

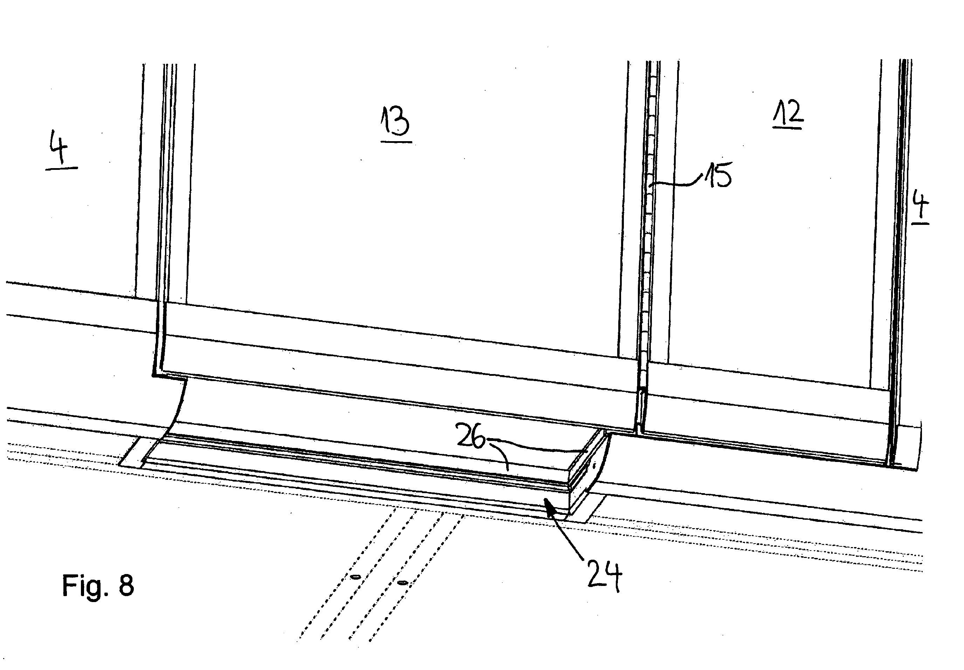

In Fig. 1 bis 3 und 8 ist erkennbar, dass an der Seitenwand 4 unterhalb der Türöffnung 9 ein nach oben offener Trittabschnitt 24 mit einer darunter befindlichen Trittstufe 25 vorgesehen ist. Bei geschlossner Fahrzeugtür erstreckt sich der Trittabschnitt 24 etwa über die gesamte Breite des äußeren Türflügels 13 (Fig. 1). Unterhalb der Stelle, an der sich die Ablagefächer 18A, 18B, 18C befinden, wenn die Fahrzeugtür 10 geöffnet ist, ist kein Trittabschnitt 24 vorgesehen (Fig. 3). Der Trittabschnitt 24 erstreckt sich also nur über einen Teil der Breite der Türöffnung 9.

An der Unterseite des Bodens des Ablagefachs 18C ist eine Türdichtung 26 angeordnet ist, die bei in Schließstellung befindlicher Fahrzeugtür 10 derart an einem der Türdichtung 26 zugewandten Rand des Trittabschnitts 24 zur Anlage kommt, dass der Passagierraum 3 gegen den Trittabschnitt 24 abgedichtet ist.

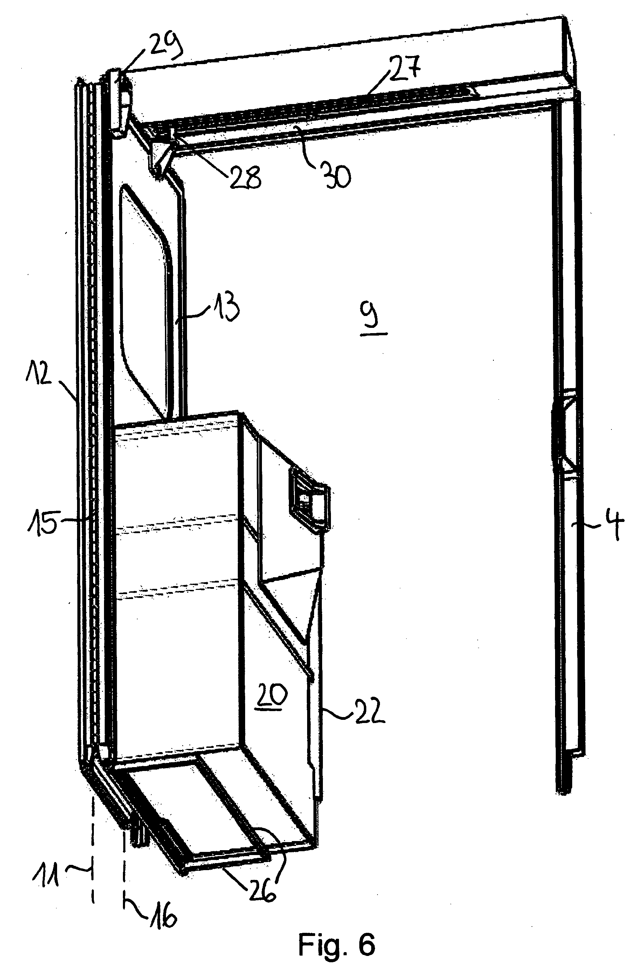

In Fig. 4 bis 6 ist erkennbar, dass an der Seitenwand oberhalb der Türflügel 12, 13 eine horizontale Führungsschiene 27 angeordnet ist, die sich in Fahrzeuglängsrichtung erstreckt. Am äußeren Türflügel 13 ist ein von der zweiten Vertikalachse beabstandetes Führungsteil 28 angeordnet das entlang der Führungsschiene 27 verschiebbar ist und um eine parallel zu den Vertikalachsen 11, 16 verlaufende Achse relativ zur Führungsschiene 27 verdrehbar bzw. verschwenkbar ist. In Schließstellung der Fahrzeugtür 10 entspricht der horizontale Abstand zwischen der Achse, um die das Führungsteil 28 relativ zur Führungsschiene 27 verdrehbar ist, und der zweiten Vertikalachse 16 etwa dem Abstand zwischen den Vertikalachsen 11, 16.

In Fig. 4 bis 6 ist erkennbar, dass am äußeren Türflügel 13 benachbart zum inneren Türflügel 12 ein Anschlag 29 angeordnet ist, der in Schließstellung der Fahrzeugtür 10 gegen eine an der Seitenwand 4 vorgesehene Widerlagerstelle 30 positioniert ist.

## Patentansprüche

1. Kraftfahrzeug (1), insbesondere Rettungsfahrzeug, mit einem Passagierraum (3), der durch mindestens eine Seitenwand (4) begrenzt ist, die eine Türöffnung (9) aufweist, an der eine in eine Offen- und eine Schließstellung bringbare Fahrzeugtür (10) angeordnet ist, wobei in dem Passagierraum (3) benachbart zu der Türöffnung (9) mindestens ein Ablagefach (18A 18B, 1 8C) zur Aufnahme von Ausrüstungsgegenständen des Kraftfahrzeugs (1) vorgesehen ist, **dadurch** gekenntzeichnet, **dass** die Fahrzeugtür (10) als Drehfalttür mit einem inneren, um eine erste Vertikalachse (11) verschwenkbar mit der Seitenwand (4) verbundenen Türflügel (12) und einem äußeren Türfjügel (1 3) ausgestaltet ist, der über eine parallel zu der ersten Vertikalachse (11) angeordnete zweite Vertikalachse (16) derart mit dem inneren Türflügel (12) verschwenkbar verbunden ist, dass die in der Schließstellung der Fahrzeugtür (10) dem Passagierraum (3) abgewandten Außenseiten der Türflügel (12, 13) beim Öffnen der Fahrzeugtür (10) aufeinander zu- und beim Schließen der Fahrzeugtür (10) voneinander weg verschwenken, und dass das mindestens eine Ablagefach (18A, 18B, 18C) an der in der Schließstellung dem Passagierraum (3) zugewandten Innenseite des äußeren Türflügels (13) angeordnet ist.

2. Kraftfahrzeug (1) nach Anspruch 1, **dadurch gekennzeichnet, dass** der äußere Türflügel (13) gegenüber dem inneren Türflügel (12) derart verbreitert ist, dass das Ablagefach (18A, 18B, 18C) in der Offenstellung der Fahrzeugtür (10) gegenüber der dem Passagierraum (3) abgewandten Außenfläche der Seitenwand (4) nach außen vorsteht.

3. Kraftfahrzeug (1) nach Anspruch 1 oder 2, **dadurch gekennzeichnet, dass** die Fahrzeugtür (10) seitlich am Kraftfahrzeug (1) angeordnet ist, vorzugsweise an der Beifahrerseite.

4. Kraftfahrzeug (1) nach Anspruch 3, **dadurch gekennzeichnet, dass** das Kraftfahrzeug (1) an der Seite, an der sich die Fahrzeugtür (10) befindet, einen Außenspiegel (17) aufweist, und dass der äußere Türflügel (13) gegenüber dem inneren Türflügel (12) derart verbreitert ist, dass er bei in Offenstellung befindlicher Fahrzeugtür (10) nicht weiter über die Außenfläche der Seitenwand (4) nach außen vorsteht als der Außenspiegel (17).

5. Kraftfahrzeug (1) nach einem der Ansprüche 1 bis 4, **dadurch gekennzeichnet, dass** das Ablagefach (18A, 18B, 18C) zwischen einer dem Passagierraum (3) zugewandten, mit dem äußeren Türflügel (13) verbundenen inneren Fachwand (20) und dem äußeren Türflügel (1 3) gebildet ist, und dass das mindestens eine Ablagefach (18A 18B, 18C) an seiner dem äußeren Rand des inneren Türflügels (12) abgewandten Seite wenigstens eine Öffnung (21A 21 B, 21 C) aufweist, die sich quer zu der vom äußeren Türflügel (13) aufgespannten Ebene erstreckt.

6. Kraftfahrzeug (1) nach Anspruch 5, **dadurch gekennzeichnet, dass** an dem dem äußeren Türflügel (13) abgewandt gegenüberliegenden Rand der Öffnung (21A 21 B, 21 C) ein Türgriff (22) angeordnet ist, der vorzugsweise als Griffstange ausgestaltet ist.

7. Kraftfahrzeug (1) nach einem der Ansprüche 1 bis 6, **dadurch gekennzeichnet, dass** an der bei in Schließstellung befindlicher Fahrzeugtür (10) dem Passagierraum (3) zugewandten Innenseite der inneren Fachwand (20) und/oder des äußeren Türflügels (13) eine Bedieneinrichtung (23) zum Betätigen von Funktionen des Kraftfahrzeugs (1) derart angeordnet ist, dass die Bedieneinrichtung (23) bei in Offenstellung befindlicher Fahrzeugtür (10) au-ßerhalb des Passagierraums (3) angeordnet ist.

8. Kraftfahrzeug (1) nach einem der Ansprüche 1 bis 7, **dadurch gekennzeichnet, dass** an der Seitenwand (4) unterhalb der Türöffnung (9) ein nach oben offener Trittabschnitt (24) mit einer darunter befindlichen Trittstufe (25) vorgesehen ist, und dass an der Unterseite des Ablagefachs (18C) vorzugsweise eine Türdichtung (26) angeordnet ist, die bei in Schließstellung befindlicher Fahrzeugtür (10) derart am Rand des Trittabschnitts (24) zur Anlage kommt, dass der Passagierraum (3) gegen den Trittabschnitt (24) abgedichtet ist.

9. Kraftfahrzeug (1) nach einem der Ansprüche 1 bis 8, **dadurch gekennzeichnet, dass** an der Seitenwand (4) oberhalb der Türflügel (12, 13) eine horizontale Führungsschiene (27) angeordnet ist, dass am äußeren Türflügel (14) ein von der zweiten Vertikalachse (16) beabstandetes, an der Führungsschiene (27) verschiebbares Führungsteil (28) angeordnet ist.

10. Kraftfahrzeug (1) nach Anspruch 9, **dadurch gekennzeichnet, dass** am inneren Türflügel (12) und/oder am äußeren Türflügel (13) zwischen der ersten Vertikalachse (11) und dem Führungsteil (28) ein Anschlag (29) angeordnet ist, der in Schließstellung der Fahrzeugtür (10) gegen eine an der Seitenwand (4) vorgesehene Widerlagerstelle (30) positioniert ist.

## Claims

1. Motor vehicle (1), in particular rescue vehicle, with a passenger compartment (3) which is delimited by at least one side wall (4) which has a door opening (9) on which a vehicle door (10) which can be brought into a open position and a closed position is arranged, wherein at least one storage compartment (18A, 18B, 18C) for receiving equipment items of the motor vehicle (1) is provided in the passenger compartment (3) adjacent to the door opening (9), **characterized in that** the vehicle door (10) is designed as a folding hinge door with an inner fold (12) which is connected to the side wall (4) so as to be pivotable about a first vertical axis (11) and with an outer fold (13) which is connected pivotably via a second vertical axis (16), which is arranged parallel to the first vertical axis (11), to the inner fold (12) in such a manner that the outer sides of the folds (12, 13) that face away from the passenger compartment (3) in the closed position of the vehicle door (10) pivot towards each other as the vehicle door (10) is opened and away from each other as the vehicle door (10) is closed, and **in that** the at least one storage compartment (18A, 18B, 18C) is arranged on the inner side of the outer fold (13) that faces the passenger compartment (3) in the closed position.

2. Motor vehicle (1) according to Claim 1, **characterized in that** the outer fold (13) is widened in relation to the inner fold (12) in such a manner that, in the open position of the vehicle door (10), the storage compartment (18A, 18B, 18C) protrudes outwards in relation to the outer surface of the side wall (4) that faces away from the passenger compartment (3).

3. Motor vehicle (1) according to Claim 1 or 2, **characterized in that** the vehicle door (10) is arranged on the side of the motor vehicle (1), preferably on the passenger's side.

4. Motor vehicle (1) according to Claim 3, **characterized in that** the motor vehicle (1) has an exterior mirror (17) on the side on which the vehicle door (10) is situated, and **in that** the outer fold (13) is widened in relation to the inner fold (12) in such a manner that, when the vehicle door (10) is in the open position, said cuter fold does not protrude outwards over the outer surface of the side wall (4) further than the exterior mirror (17).

5. Motor vehicle (1) according to one of Claims 1 to 4, **characterized in that** the storage compartment (18A, 18B, 18C) is formed between an inner compartment wall (20), which faces the passenger compartment (3) and is connected to the outer fold (13), and the outer fold (13), and **in that** the at least one storage compartment (18A, 18B, 18C) has, on the side thereof that faces away from the outer edge of the inner fold (12), at least one opening (21A, 21B, 21C) which extends transversely with respect to the plane spanned by the outer fold (13).

6. Motor vehicle (1) according to Claim 5, **characterized in that** a door handle (22) which is preferably designed as handlebar is arranged on the opposite edge of the opening (21A, 21B, 21C), which edge faces away from the outer fold (13).

7. Motor vehicle (1) according to one of Claims 1 to 6, **characterized in that** an operating devise (23) for actuating functions of the motor vehicle (1) is arranged on the inner side of the inner compartment wall (20) and/or of the outer fold (13), which inner side faces the passenger compartment (3) when the vehicle door (10) is in the closed position, in such a manner that, when the vehicle door (10) is in the open position, the operating element (23) is arranged outside the passenger compartment (3).

8. Motor vehicle (1) according to one of Claims 1 to 7, **characterized in that** an upwardly open step section (24) with a step (25) located therebelow is provided on the side wall (4) below the door opening (9), and **in that** a door seal (26) is preferably arranged on the lower side of the storage compartment (18C), which door seal, when the vehicle door (10) is in the closed position, comes to bear against the edge of the step section (24) in such a manner that the passenger compartment (3) is sealed off from the step section (24).

9. Motor vehicle (1) according to one of Claims 1 to 8, **characterized in that** a horizontal guide rail (27) is arranged on the side wall (4) above the folds (12, 13) and **in that** a guide part (28) which is spaced apart from the second vertical axis (16) and is displaceable along the guide rail (27) is arranged on the outer fold (13).

10. Motor vehicle (1) according to Claim 9, **characterized in that** a stop (29) is arranged on the inner fold (12) and/or on the outer fold (13) between the first vertical axis (11) and the guide part (28), said stop, in the closed position of the vehicle door (10), being positioned against an abutment point (30) provided on the side wall (4).

## Revendications

1. Véhicule automobile (1), en particulier véhicule de secours, comprenant un compartiment pour passagers (3) qui est délimité par au moins une paroi latérale (4) qui comprend une ouverture de porte (9) au niveau de laquelle est disposée une porte de véhicule (10) pouvant être amenée à une position ouverte et à une position fermée, au moins un compartiment de rangement (18A, 18B, 18C) destiné à recevoir des objets d'équipement du véhicule automobile (1) étant prévu dans le compartiment pour passagers (3) à proximité de l'ouverture de porte (9), **caractérisé en ce que** la porte de véhicule (10) est configurée sous forme de porte pivotante et pliante pourvue d'un vantail de porte intérieur (12) pouvant pivoter autour d'un premier axe vertical (11) et relié à la paroi latérale (4) et d'un vantail de porte extérieur (13) qui est relié de manière pivotante au vantail de porte intérieur (12) par le biais d'un deuxième axe vertical (16) disposé parallèlement au premier axe vertical (11), de telle sorte que les côtés extérieurs des vantaux de porte (12, 13) opposés au compartiment pour passagers (3) dans la position fermée de la porte de véhicule (10) soient pivotés l'un vers l'autre lors de l'ouverture de la porte de véhicule (10) et soient pivotés à l'écart l'un de l'autre lors de la fermeture de la porte de véhicule (10), et **en ce que** l'au moins un compartiment de rangement (18A, 18B, 18C) est disposé sur le côté intérieur, tourné vers le compartiment pour passagers (3) dans la position fermée, du vantail de porte extérieur (13).

2. Véhicule automobile (1) selon la revendication 1, **caractérisé en ce que** le vantail de porte extérieur (13) est élargi par rapport au vantail de porte intérieur (12), de telle sorte que le compartiment de rangement (18A, 18B, 18C) fasse saillie vers l'extérieur par rapport à la surface extérieure de la paroi latérale (4) opposée au compartiment pour passagers (3) dans la position ouverte de la porte de véhicule (10).

3. Véhicule automobile (1) selon la revendication 1 ou 2, **caractérisé en ce que** la porte de véhicule (10) est disposée latéralement sur le véhicule automobile (1), de préférence sur le côté opposé au côté conducteur.

4. Véhicule automobile (1) selon la revendication 3, **caractérisé en ce que** le véhicule automobile (1) comprend, sur le côté sur lequel la porte de véhicule (10) se trouve, un rétroviseur extérieur (17), et **en ce que** le vantail de porte extérieur (13) est élargi par rapport au vantail de porte intérieur (12) de telle sorte qu'il ne fasse pas plus saillie vers l'extérieur que le rétroviseur extérieur (17) au-delà de la surface extérieure de la paroi latérale (4) lorsque la porte de véhicule (10) se trouve dans la position ouverte.

5. Véhicule automobile (1) selon l'une quelconque des revendications 1 à 4, **caractérisé en ce que** le compartiment de rangement (18A, 18B, 18C) est formé entre une paroi de compartiment intérieure (20) tournée vers le compartiment pour passagers (3) et reliée au vantail de porte extérieur (13) et le vantail de porte extérieur (13), et **en ce que** l'au moins un compartiment de rangement (18A, 18B, 18C) comprend, sur son côté opposé au bord extérieur du vantail de porte intérieur (12), au moins une ouverture (21A, 21B, 21C) qui s'étend transversalement au plan défini par le vantail de porte extérieur (13).

6. Véhicule automobile (1) selon la revendication 5, **caractérisé en ce qu'**une poignée de porte (22) est disposée sur le bord de l'ouverture (21A, 21B, 21C) opposé de manière détournée du vantail de porte extérieur (13), laquelle poignée de porte est de préférence réalisée sous forme de barre de préhension.

7. Véhicule automobile (1) selon l'une quelconque des revendications 1 à 6, **caractérisé en ce qu'**un dispositif de commande (23) pour actionner des fonctions du véhicule automobile (1) est disposé sur le côté intérieur, tourné vers le compartiment pour passagers (3) lorsque la porte de véhicule (10) se trouve dans la position fermée, de la paroi de compartiment intérieure (20) et/ou du vantail de porte extérieur (13), de telle sorte que le dispositif de commande (23) soit disposé à l'extérieur du compartiment pour passagers (3) lorsque la porte de véhicule (10) se trouve dans la position ouverte.

8. Véhicule automobile (1) selon l'une quelconque des revendications 1 à 7, **caractérisé en ce que** sur la paroi latérale (4) en dessous de l'ouverture de porte (9) est prévue une section de marche (24) ouverte vers le haut avec un marchepied (25) se trouvant en dessous, et **en ce que** de préférence un joint d'étanchéité de porte (26) est disposé sur le côté inférieur du compartiment de rangement (18C), lequel joint d'étanchéité de porte vient s'appliquer contre le bord de la section de marche (24) lorsque la porte de véhicule (10) se trouve dans la position fermée, de telle sorte que le compartiment pour passagers (3) soit rendu étanche par rapport à la section de marche (24).

9. Véhicule automobile (1) selon l'une quelconque des revendications 1 à 8, **caractérisé en ce que** sur la paroi latérale (4) au-dessus des vantaux de porte (12, 13) est disposé un rail de guidage horizontal (27), et **en ce qu'**une partie de guidage (28) espacée du deuxième axe vertical (16) et pouvant coulisser sur le rail de guidage (27) est disposée sur le vantail de porte extérieur (13).

10. Véhicule automobile (1) selon la revendication 9, **caractérisé en ce qu'**une butée (29) est disposée sur le vantail de porte intérieur (12) et/ou sur le vantail de porte extérieur (13) entre le premier axe vertical (11) et la partie de guidage (28), laquelle butée est, dans la position fermée de la porte de véhicule (10), positionnée contre un point de contre-appui (30) prévu sur la paroi latérale (4).
